# EUROPÄISCHE PATENTSCHRIFT

(11) **EP 3 573 171 B1**
(45) Veröffentlichungstag und Bekanntmachung des Hinweises auf die Patenterteilung: **14.10.2020**
(21) Anmeldenummer: 19170595.3
(22) Anmeldetag: 23.04.2019
(51) Int. Cl.: H01M 10/48, H01M 10/613, H01M 10/625, H01M 10/6571, B60L 58/27

(54) **VORRICHTUNG ZUR TEMPERATURKONDITIONIERUNG EINER BATTERIE, BATTERIEEINHEIT UND VERFAHREN ZUR TEMPERATURKONDITIONIERUNG EINER BATTERIE**
DEVICE FOR TEMPERATURE CONDITIONING OF A BATTERY, BATTERY UNIT AND METHOD FOR TEMPERATURE CONDITIONING OF A BATTERY
DISPOSITIF DE MISE EN CONDITION DE LA TEMPÉRATURE D'UNE BATTERIE, UNITÉ DE BATTERIE ET PROCÉDÉ DE MISE EN CONDITION DE LA TEMPÉRATURE D'UNE BATTERIE

(30) Priorität: 17.05.2018 DE 102018207797
(43) Veröffentlichungstag der Anmeldung: 27.11.2019
(73) Patentinhaber: VOLKSWAGEN AKTIENGESELLSCHAFT, 38440 Wolfsburg (DE)
(72) Erfinder: Kusch, Rüdiger, 38116 Braunschweig (DE); Kaufhold, Christoph, 38118 Braunschweig (DE); Schulte, Sebastian, 38114 Braunschweig (DE)
(74) Vertreter: Patentanwälte Bressel und Partner mbB

(56) Entgegenhaltungen:
- DE-A1-102015 015 007
- US-A1- 2012 280 659

## Beschreibung

Die Erfindung betrifft eine Vorrichtung zur Temperaturkonditionierung einer Batterie, eine Batterieeinheit und ein Verfahren zur Temperaturkonditionierung einer Batterie.

Bei Batterien ist es bekannt, dass deren Innenwiderstand bei niedrigen Temperaturen steigt, sodass deren Wirkungsgrad abnimmt. Daher ist es bekannt, für eine Batterie eine Temperaturkonditionierung vorzunehmen und diese vorzuheizen. Dabei wird versucht, so wenig Energie wie möglich der Batterie für den Heizvorgang zu entnehmen.

Aus der DE 10 2014 214 313 A1 ist eine Vorrichtung zur Erwärmung einer Batterie bekannt, umfassend eine Vielzahl von Batteriezellen, wobei die Vorrichtung der Batterie elektrische Energie entnimmt. Das Entnehmen der elektrischen Energie setzt in der Vielzahl von Batteriezellen thermische Energie frei, die die Batteriezellen erwärmt. Dabei speichert die Vorrichtung die entnommene Energie in einer anderen Batterie. Vorzugsweise umfasst die Vorrichtung eine Gleichspannungswandlereinrichtung, die mit der Batterie und der anderen Batterie verbindbar ist.

Aus der DE 10 2010 032 088 A1 ist ein Verfahren zum Beheizen eines Batteriesystems mit wenigstens zwei Batterien oder Batterieabschnitten bekannt, wobei die Beheizung des Batteriesystems durch das abwechselnde Laden und Entladen des Batteriesystems mit einem Wechselstrom erfolgt. Dabei erfolgt die Beaufschlagung mit dem Wechselstrom für die eine Batterie oder den einen Batterieabschnitt phasenversetzt zur Beaufschlagung mit Wechselstrom der anderen Batterie oder des anderen Batterieabschnitts, sodass mit dem Batteriesystem auch während der Beheizung eine zumindest annähernd konstante Spannung bereitgestellt wird. Dabei erfolgt das Laden/Entladen jeder der Batterien oder Batterieabschnitte mittels einer Belastungseinrichtung, wobei in der Belastungseinrichtung Energie kapazitiv und/oder induktiv zwischengespeichertwird.

Aus der DE 10 2009 001 047 A1 ist ein Verfahren zum Erwärmen von Speicherzellen eines elektrischen Energiespeichers bekannt, wobei mindestens eine erste der Speicherzellen und mindestens eine zweite der Speicherzellen in Serie geschaltet sind, wobei abwechselnd die erste Speicherzelle und die zweite Speicherzelle mindestens ein elektrisch an einem Zwischenabgriff zwischen der ersten und der zweiten Speicherzelle angeschlossenes induktives Bauelement bestromen.

Der Erfindung liegt das technische Problem zugrunde, eine Vorrichtung zur Temperaturkonditionierung einer Batterie mit besserem Wirkungsgrad zu schaffen sowie eine Batterieeinheit mit solcher Vorrichtung zu schaffen. Ein weiteres technisches Problem steht in der Zurverfügungstellung eines verbesserten Verfahrens zur Temperaturkonditionierung einer Batterie.

Die Lösung des technischen Problems ergibt sich durch eine Vorrichtung mit den Merkmalen des Anspruchs 1, eine Batterieeinheit mit den Merkmalen des Anspruchs 4 sowie ein Verfahren mit den Merkmalen des Anspruchs 7. Weitere vorteilhafte Ausgestaltungen der Erfindung ergeben sich aus den Unteransprüchen.

Hierzu weist die Vorrichtung zur Temperaturkonditionierung einer Batterie ein Schaltelement auf, das zwischen einem oberen Teil und einem unteren Teil der Batterie angeordnet ist. Vorzugsweise wird dabei die Batterie symmetrisch geteilt. Weiter weist die Vorrichtung einen galvanisch getrennten DC/DC-Wandler auf, wobei der DC/DC-Wandler eine Primärseite und eine Sekundärseite aufweist. Dabei weist die Primärseite einen ersten Anschluss für den positiven Pol DC+ der Batterie und einen zweiten Anschluss für das untere Potential des oberen Teils der Batterie auf, sodass im Falle der symmetrischen Teilung die halbe Batteriespannung an der Primärseite anliegt. Die Sekundärseite weist einen dritten Anschluss für das obere Potential des unteren Teils der Batterie und einen vierten Anschluss für den negativen Pol DCder Batterie auf, wobei die Primärseite und die Sekundärseite jeweils zwei Halbbrücken aufweisen, zwischen denen ein Transformator angeordnet ist, wobei mindestens eine Seite mit einem LC-Glied beschaltet ist, um einen LLC-Wandler bzw. LLC-Resonanzkonverter zu bilden. Hierdurch kann der Transformator als HF-Transformator im Kilohertz-Bereich betrieben werden, wobei die Verluste reduziert sind, da die Schaltelemente in den Nulldurchgängen von Strom oder Spannung geschaltet werden (soft switched), sodass also keine Schaltverluste in den Schaltern auftreten. Aufgrund der hohen Schaltfrequenzen von beispielsweise 40 - 200 kHz können somit auch kleine Ladungspakete sehr schnell hin- und hergeladen werden, sodass ausreichend schnell eine Erwärmung der Batterie erfolgt, auch wenn diese beispielsweise sehr stark geladen ist. In einem solchen Fall können zur Vermeidung einer Überladung nur geringe Ladungspakete umgeladen werden. Dies wird durch den LLC-Wandler gelöst. Dabei wird in einer Ausführungsform nur ein LC-Glied in Reihe zur Primärspule geschaltet. Es kann jedoch auch vorgesehen sein, dass eine weitere zusätzliche Induktivität parallel zur Primärspule angeordnet wird. Der Schalter zwischen dem oberen und unteren Teil der Batterie ist vorzugsweise als Relais ausgebildet, sodass die beiden Teil-Batterien galvanisch getrennt werden können. Der DC/DC-Wandler ist vorzugsweise bidirektional ausgebildet. Ist dann nur eine Seite als LLC-Resonanzwandler ausgebildet, steigen die Verluste in Rückwärtsrichtung. Sind hingegen beide Seiten mit LC-Gliedern beschaltet, so steigen in beiden Richtungen die Verluste aufgrund des LC-Gliedes auf der anderen Seite. Vorzugsweise wird daher nur eine Seite mit einem LC-Glied beschaltet und die Unsymmetrie in Kauf genommen.

Um nun den Wirkungsgrad weiter zu verbessern, weist der Transformator eine Flüssigkeitskühlung (z.B. eine Wasserkühlung) auf, die in einem Kühlkreislauf der Batterie integriert ist oder in einem Kühlkreislauf der Batterie schaltbar ist. Hierdurch wird auch die anfallende Verlustwärme zum Heizen der Batterie verwendet. Dies erhöht den Wirkungsgrad weiter.

In einer weiteren Ausführungsform weisen zusätzlich mindestens die Halbbrücken eine Flüssigkeitskühlung auf, die in einen Kühlkreislauf der Batterie integriert ist oder in einen Kühlkreislauf der Batterie schaltbar ist. Auch diese Maßnahme erhöht den Wirkungsgrad der Temperaturkonditionierung. Prinzipiell kann auch das LC-Glied in den Kühlkreislauf integriert werden, wobei jedoch die Dichtungsmaßnahmen entsprechend aufwendiger sind, sodass vorzugsweise das LC-Glied aus der Kühlung ausgespart ist.

Die Batterieeinheit weist mehrere Batteriemodule auf, die miteinander verschaltet sind. Weiter weist die Batterieeinheit ein Batterie-Management-Steuergerät sowie eine zuvor beschriebene Vorrichtung zur Temperaturkonditionierung auf, wobei vorzugsweise das Batterie-Management-Steuergerät die Vorrichtung ansteuert.

In einer Ausführungsform weist die Vorrichtung die geometrischen Abmessungen eines Batteriemoduls auf. Somit kann sehr einfach die Vorrichtung in eine bestehende Batterieeinheit eingesetzt werden, indem diese einfach gegen ein Batteriemodul getauscht werden kann, wobei dann nur noch die Verschaltung angepasst werden muss.

In einer weiteren Ausführungsform weist die Batterieeinheit einen Kühlkreislauf auf, wobei in dem Kühlkreislauf weitere Elemente angeordnet sind, wobei der Kühlkreislauf derart ausgebildet ist, dass die weiteren Elemente aus dem Kühlkreislauf heraus- oder in den Kühlkreislauf hineinschaltbar sind. Beispielsweise ist das weitere Element ein Klimakompressor. Ist der Kühlkreislauf sehr groß, so ist die thermische Masse der Kühlflüssigkeit sehr groß, sodass der Heizeffekt für die Batterieeinheit geringer ist. Durch das temporäre Herausschalten der weiteren Elemente während der Temperaturkonditionierung kann der Wirkungsgrad erhöht werden, da weniger Kühlflüssigkeit erwärmt werden muss.

Hinsichtlich der Elemente, die in den Kühlkreislauf integriert sein können bzw. in diesen hineinschaltbar sind, kann auf die vorangegangenen Ausführungen zur Vorrichtung Bezug genommen werden.

Das Verfahren zur Temperaturkonditionierung umfasst die folgenden Verfahrensschritte:
Es wird eine Batterietemperatur erfasst oder ermittelt, wobei unterhalb eines Schwellwertes eine Temperaturkonditionierung durchgeführt wird. Die Temperatur wird vorzugsweise durch Temperatursensoren von Batteriezellen in den Batteriemodulen erfasst. Der Schwellwert liegt beispielsweise zwischen 0 °C bis 15 °C.

Ist eine Temperaturkonditionierung notwendig, so wird das Schallelement zwischen dem oberen Teil und dem unteren Teil der Batterie angesteuert, sodass der obere Teil und der untere Teil elektrisch getrennt werden, wobei dies vorzugsweise eine galvanische Trennung ist.

Anschließend wird die Vorrichtung zur Temperaturkonditionierung durch das Batterie-Management-Steuergerät derart angesteuert, dass abwechselnd Energie von der Primärseite zur Sekundärseite und umgekehrt transportiert wird, bis ein Schwellwert für die Batterietemperatur überschritten wird, wobei der Schwellwert beispielsweise 20 °C ist.

Schließlich wird das Schaltelement zwischen dem oberen Teil und dem unteren Teil der Batterie angesteuert, sodass der obere und untere Teil wieder elektrisch verbunden sind.

In einer Ausführungsform wird vor oder während des Heizens eine Flüssigkeitskühlung des Transformators in den Kühlkreislauf der Batterie geschaltet, um so die thermische Verlustleistung auch zum Heizen zu verwenden. Alternativ oder zusätzlich kann auch eine Flüssigkeitskühlung der Halbbrücken in den Kühlkreislauf geschaltet werden.

In einer weiteren Ausführungsform werden weitere Elemente aus dem Kühlkreislauf der Batterie herausgeschaltet, um so die verbleibende Kühlmittelflüssigkeit stärker zu erwärmen.

Die Erfindung wird nachfolgend anhand bevorzugter Ausführungsbeispiele näher erläutert. Die Figuren zeigen:
- Fig. 1: eine schematische Darstellung einer Batterie mit einerVorrichtung zur Temperaturkonditionierung,
- Fig. 2: eine schematische Darstellung eines alternativen Kühlkreislaufes und
- Fig. 3: eine schematische Darstellung einerBatterieeinheit.

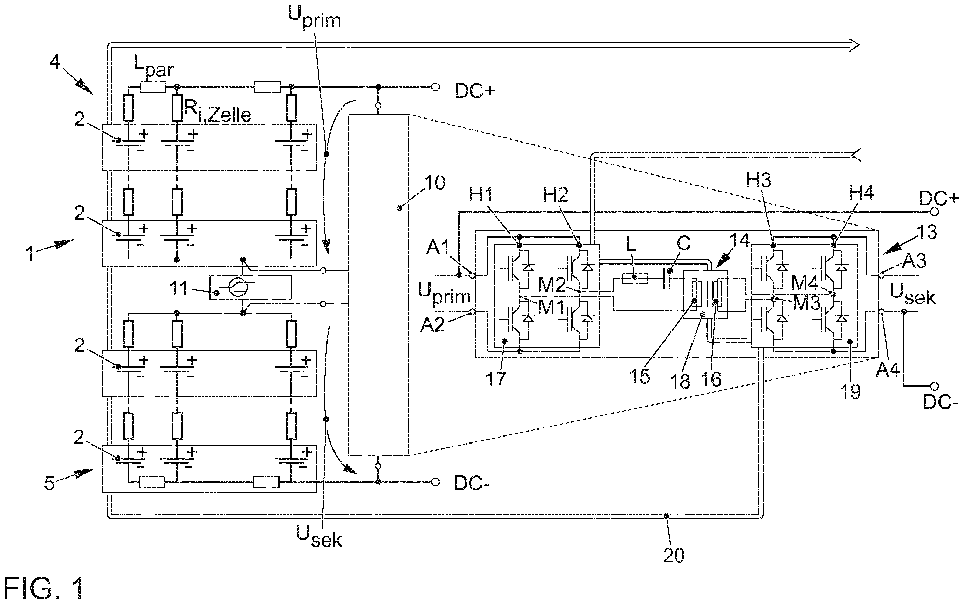

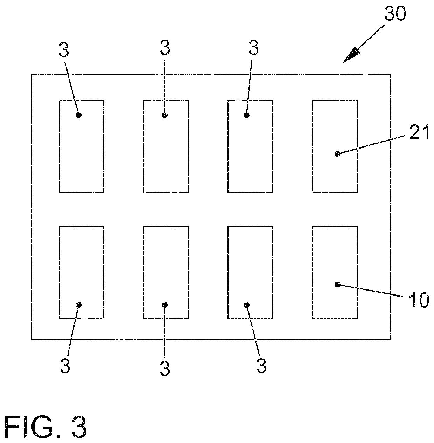

In der Fig. 1 ist schematisch eine Batterie 1 dargestellt, die sich aus einer Vielzahl von Batteriezellen 2 zusammensetzt, die in Reihe und parallel geschaltet sind, wobei die Batteriezellen 2 gruppenweise in Batteriemodulen 3 zusammengefasst sind (siehe auch Fig. 3). Zwischen den einzelnen Batteriezellen 2 bilden sich parasitäre Induktivitäten Lₚₐᵣ aus, die hier aber nicht näher betrachtete werden sollen. Weiter weisen die einzelnen Batteriezellen 2 einen Innenwiderstand R_{i,Zelle} auf, an dem beim Laden und Entladen Verlustleistung in Form von Wärme abfällt. Die Batterie 1 weist einen positiven Pol DC+ und einen negativen Pol DC- auf, die beispielsweise über nicht dargestellte Schütze mit einem Traktionsnetz eines Kraftfahrzeugs verbindbar sind. Weiter ist eine Vorrichtung 10 zur Temperaturkonditionierung der Batterie 1 dargestellt. Die Vorrichtung 10 weist ein Schaltelement 11 auf, das hier aus Darstellungsgründen abgesetzt dargestellt ist, aber Bestandteil der Vorrichtung 10 ist. Das Schaltelement 11 ist zwischen einem oberen Teil 4 der Batterie 1 und einem unteren Teil 5 der Batterie 1 angeordnet. Das Schaltelement 11 ist dabei vorzugsweise ein Schütz, das den oberen Teil 4 und den unteren Teil 5 galvanisch trennt. Dabei fällt eine Primärspannung Uₚᵣᵢₘ über dem positiven Pol DC+ und dem unteren Potential des oberen Teils 4 der Batterie 1 ab. Entsprechend fällt eine Sekundärspannung Uₛₑₖ über dem oberen Potential des unteren Teils 5 der Batterie 1 und dem negativen Pol DC- der Batterie 1 ab.

Die Vorrichtung 10 weist eine Primärseite 12 auf, an der die Primärspannung Uₚᵣᵢₘ anliegt, und eine Sekundärseite 13 auf, an der die Sekundärspannung Uₛₑₖ anliegt. Hierzu weist die Primärseite 12 einen ersten Anschluss A1 und einen zweiten Anschluss A2 auf. Entsprechend weist die Sekundärseite 13 einen dritten Anschluss A3 und einen vierten Anschluss A4 auf. Die Vorrichtung 10 stellt dabei einen DC/DC-Wandler dar, was nachfolgend noch erläutert wird. An der Primärseite 12 liegen zwei Halbbrücken H1, H2. Die Halbbrücken H1, H2 weisen jeweils zwei Schaltelemente mit Freilaufdioden auf, wobei zwischen den beiden Schaltelementen ein Mittelabgriff M1, M2 ist. Analog liegen an der Sekundärseite 13 zwei Halbbrücken H3, H4, wobei zwischen den beiden Schaltelementen je Halbbrücke wieder jeweils ein Mittelabgriff M3, M4 ist. Zwischen den beiden Halbbrücken H1, H2 der Primärseite 12 und den beiden Halbbrücken H3, H4 der Sekundärseite 13 ist ein Transformator 14 angeordnet, der eine Primärinduktivität 15 und eine Sekundärinduktivität 16 aufweist. Dabei liegt die Sekundärinduktivität 16 zwischen den beiden Mittelabgriffen M3, M4 der Halbbrücken H3, H4 der Sekundärseite 13. Die Primärinduktivität 15 liegt zwischen den beiden Mittelabgriffen M1, M2 der Primärseite 12, wobei vor dem Mittelabgriff M2 der einen Halbbrücke H2 noch ein LC-Glied angeordnet ist. Der Transformator 14 sowie jeweils die Halbbrücken H1, H2 bzw. H3, H4 weisen jeweils eine Flüssigkeitskühlung 17, 18, 19 auf, die in einen Kühlkreislauf der Batterie 1 integriert sind.

Die Funktionsweise der Vorrichtung 10 soll nun kurz erläutert werden , wobei nun angenommen sei, dass die Batterie 1 eine Traktionsbatterie eines Elektro- oder Hybridfahrzeuges ist. Vor dem Start des Kraftfahrzeuges prüft ein Batterie-Management-Steuergerät 21 (siehe Fig. 3) die Temperatur der Batterie 1 bzw. der Batteriezellen 2. Liegt dann die Temperatur unterhalb eines Schwellwertes, so wird mittels der Vorrichtung 10 eine Temperaturkonditionierung der Batterie 1 durchgeführt. Hierzu wird das ansonsten geschlossene Schaltelement 11 angesteuert und geöffnet, sodass der obere Teil 4 und der untere Teil 5 der Batterie 1 galvanisch getrennt sind. In einem ersten Schritt wird dann die Primärspannung Uₚᵣᵢₘ mittels der beiden Halbbrücken H1, H2 in eine hochfrequente Wechselspannung gewandelt und auf die Sekundärseite 13 transformiert. Dabei bildet das LC-Glied mit der Primärinduktivität 15 einen LLC-Resonanzwandler aus, sodass nahezu verlustfrei geschaltet werden kann. Die Wechselspannung in der Sekundärinduktivität 16 wird dann mittels der Halbbrücken H3, H4 in eine Gleichspannung gewandelt, um die Batteriezellen 2 in dem unteren Teil 5 der Batterie 1 zu laden. Anschließend erfolgt der Vorgang umgekehrt, d.h. es wird von der Sekundärseite 13 zur Primärseite 12 eine Spannung transformiert, um die Batteriezellen 2 in dem oberen Teil 4 der Batterie 1 zu laden. Bei den Lade- und Entladevorgängen wird dabei jeweils Verlustleistung an den Innenwiderständen R_{i,Zelle} in Wärme umgesetzt und so die Batteriezellen 2 bzw. die Batterie 1 insgesamt erwärmt. Wie lange ein einzelner Zyklus dauert, ist dabei vorzugsweise abhängig vom SOC (state of Charge) der Batteriezellen, da ein hoher SOC die transformierbare Leistung reduziert, da eine Überladung der Batteriezellen 2 vermieden werden sollte. Ein Teil der elektrischen Verluste tritt dabei im Transformator 14 bzw. in den Halbbrücken H1, H2 bzw. H3, H4 auf. Diese Verlustwärme wird in Flüssigkeitskühlungen 17-19 an die Kühlflüssigkeit abgegeben und über den Kühlkreislauf 20 zu den Batteriezellen 2 transportiert, d.h. auch diese Verluste tragen zur Erwärmung bei, sodass insgesamt ein sehr hoher Wirkungsgrad erreicht wird.

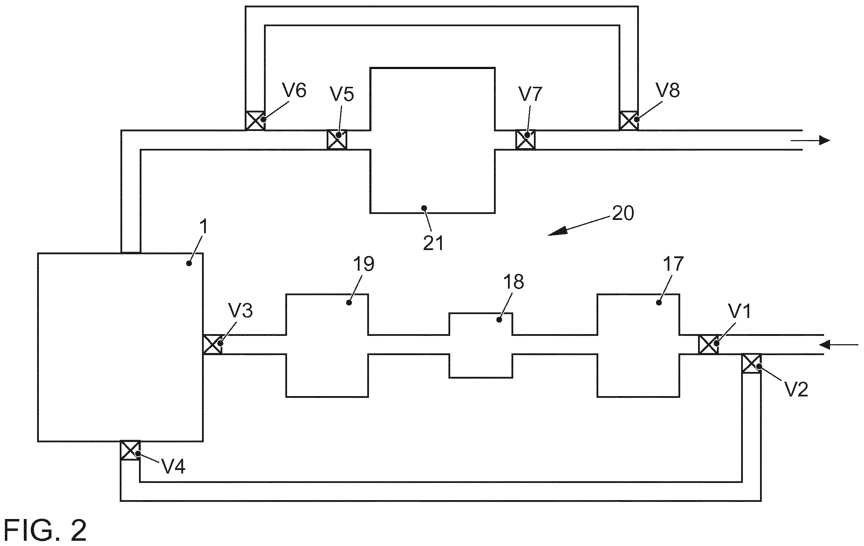

In der Fig. 1 sind die Flüssigkeitskühlungen 17-19 fest in den Kühlkreislauf 20 integriert. In der Fig. 2 ist nun schematisch ein Kühlkreislauf 20 dargestellt, mittels dessen die Flüssigkeitskühlungen 17-19 temporär in den Kühlkreislauf 20 geschaltet werden können sowie weitere Elemente 21 temporär aus dem Kühlkreislauf 20 herausgeschaltet werden können. Dies soll exemplarisch mittels der Ventile V1-V8 kurz erläutert werden.

Im Normalbetrieb ist die Vorrichtung 10 inaktiv. In diesem Fall sind die Ventile V1, V3, V6 und V8 geschlossen und die Ventile V2, V4, V5 und V7 offen. Die Kühlflüssigkeit fließt dann durch die Batterie 1 und die anderen Elemente 21 wie Klimaanlage etc. Im Fall der Temperaturkonditionierung werden dann alle Ventile umgeschaltet, sodass die Flüssigkeitskühlungen 17-19 in den Kühlkreislauf integriert werden und die anderen Elemente 21 herausgeschaltet werden.

In der Fig. 3 ist schematisch eine Batterieeinheit 30 dargestellt, die sechs Batteriemodul 3 ein Batterie-Management-Steuergerät 21 sowie eine Vorrichtung 10 zur Temperaturkonditionierung der Batterie 1 bestehend aus den sechs Batteriemodulen 3. Dabei weist die Vorrichtung 10 die gleichen geometrischen Abmessungen wie die Batteriemodule 3 auf, sodass eine Batterieeinheit 30 sehr einfach um eine solche Vorrichtung 10 ergänzt werden kann.

Ein weiterer Vorteil dieser sehr effektiven Vorrichtung 10 ist, dass die Temperaturkonditionierung bei geöffneten Schützen zum Traktionsnetz erfolgen kann.

## Patentansprüche

1. Vorrichtung (10) zur Temperaturkonditionierung einer Batterie (1), wobei die Vorrichtung (10) ein Schaltelement (11) aufweist, das zwischen einem oberen Teil (4) und einem unteren Teil (5) der Batterie (1) angeordnet ist, wobei die Vorrichtung (10) einen galvanisch getrennten DC/DC-Wandler aufweist, wobei der DC/DC-Wandler eine Primärseite (12) und eine Sekundärseite (13) aufweist, wobei die Primärseite (12) einen ersten Anschluss (A1) für den positiven Pol DC+ der Batterie (1) und einen zweiten Anschluss (A2) für das untere Potential des oberen Teils (4) der Batterie (1) aufweist, wobei die Sekundärseite (13) einen dritten Anschluss (A3) für das obere Potential des unteren Teils (5) der Batterie (1) und einen vierten Anschluss (A4) für den negativen Pol DC- der Batterie (1) aufweist, wobei die Primärseite (12) und die Sekundärseite (13) jeweils zwei Halbbrücken (H1, H2; H3, H4) aufweisen, zwischen denen ein Transformator (14) angeordnet ist, wobei mindestens eine Seite mit einem LC-Glied beschaltet ist, um einen LLC-Wandler zu bilden.

2. Vorrichtung nach Anspruch 1, **dadurch gekennzeichnet, dass** mindestens der Transformator (14) eine Flüssigkeitskühlung (18) aufweist, die in einem Kühlkreislauf (20) der Batterie (1) integriert ist oder in einem Kühlkreislauf (20) der Batterie (1) schaltbarist.

3. Vorrichtung nach Anspruch 2, **dadurch gekennzeichnet, dass** zusätzlich mindestens die Halbbrücken (H1-H4) eine Flüssigkeitskühlung (17, 19) aufweisen, die in einen Kühlkreislauf (20) der Batterie (1) integriert ist oder in einem Kühlkreislauf (20) der Batterie (1) schaltbar ist.

4. Batterieeinheit (30) umfassend mehrere Batteriemodule (3), die miteinander verschaltet sind, ein Batterie-Management-Steuergerät 821) und eine Vorrichtung (10) zur Temperaturkonditionierung mit den Merkmalen der Ansprüche 1 bis 3.

5. Batterieeinheit nach Anspruch 4, **dadurch gekennzeichnet, dass** die Vorrichtung (10) die geometrischen Abmessungen eines Batteriemoduls (3)aufweist.

6. Batterieeinheit nach Anspruch 4 oder 5, **dadurch gekennzeichnet, dass** die Batterieeinheit (10) einen Kühlkreislauf (20) aufweist, wobei in dem Kühlkreislauf (20) weitere Elemente (21) angeordnet sind, wobei der Kühlkreislauf (20) derart ausgebildet ist, dass die weiteren Elemente (21) aus dem Kühlkreislauf (20) heraus- oder in den Kühlkreislauf (20) hineinschaltbar sind.

7. Verfahren zur Temperaturkonditionierung einer Batterieeinheit nach Anspruch 4, umfassend folgende Verfahrensschritte:
a) Erfassen oder Ermitteln einer Batterietemperatur, wobei unterhalb eines Schwellwertes eine Temperaturkonditionierung durchgeführtwird,
b) Ansteuern des Schaltelements (11) zwischen dem oberen Teil (4) und dem unteren Teil (5) der Batterie (1), sodass der obere Teil (4) und der untere Teil (5) elektrisch getrennt werden,
c) Ansteuern der Vorrichtung (10) zur Temperaturkonditionierung durch das Batterie-Management-Steuergerät (21) derart, dass abwechselnd Energie von der Primärseite (12) zur Sekundärseite (13) und umgekehrt transportiert wird, bis ein Schwellwert für die Batterietemperatur überschritten wird und
d) Ansteuern des Schaltelements (11) zwischen dem oberen Teil (4) und dem unteren Teil (5), sodass der obere und untere Teil (4, 5) wieder elektrisch verbunden sind.

8. Verfahren nach Anspruch 7, **dadurch gekennzeichnet, dass** vor dem Verfahrensschritt c) oder während des Verfahrensschrittes c) eine Flüssigkeitskühlung (18) des Transformators in den Kühlkreislauf (20) der Batterie (1) geschaltet wird.

9. Verfahren nach Anspruch 7 oder 8, **dadurch gekennzeichnet, dass** vor dem Verfahrensschritt c) oder während des Verfahrensschrittes c) andere Elemente aus dem Kühlkreislauf (20) der Batterie (1) herausgeschaltetwerden.

## Claims

1. Device (10) for conditioning the temperature of a battery (1), wherein the device (10) has a switching element (11) which is arranged between an upper part (4) and a lower part (5) of the battery (1), wherein the device (10) has a galvanically isolated DC/DC convertor, wherein the DC/DC convertor has a primary side (12) and a secondary side (13), wherein the primary side (12) has a first terminal (A1) for the positive pole DC+ of the battery (1) and a second terminal (A2) for the lower potential of the upper part (4) of the battery (1), wherein the secondary side (13) has a third terminal (A3) for the upper potential of the lower part (5) of the battery (1), and a fourth terminal (A4) for the negative pole DC- of the battery (1), wherein the primary side (12) and the secondary side (13) each have two half-bridges (H1, H2; H3, H4), between which a transformer (14) is arranged, wherein at least one side is connected to an LC element in order to form an LLC convertor.

2. Device according to Claim 1, **characterized in that** at least the transformer (14) has a liquid cooling system (18) which is integrated into a cooling circuit (20) of the battery (1) or can be connected into a cooling circuit (20) of the battery (1).

3. Device according to Claim 2, **characterized in that** in addition at least the half-bridges (H1-H4) have a liquid cooling system (17, 19) which is integrated into a cooling circuit (20) of the battery (1) or can be connected into a cooling circuit (20) of the battery (1).

4. Battery unit (30) comprising a plurality of battery modules (3), which are connected to one another, a battery management control unit (821) and a device (10) for conditioning the temperature, having the features of Claims 1 to 3.

5. Battery unit according to Claim 4, **characterized in that** the device (10) has the geometric dimensions of a battery module (3).

6. Battery unit according to Claim 4 or 5, **characterized in that** the battery unit (10) has a cooling circuit (20), wherein further elements (21) are arranged in the cooling circuit (20), wherein the cooling circuit (20) is embodied in such a way that the further elements (21) can be disconnected from the cooling circuit (20) or connected into the cooling circuit (20).

7. Method for conditioning the temperature of a battery unit according to Claim 4, comprising the following method steps:
a) sensing or determining a battery temperature, wherein conditioning of the temperature is carried out below a threshold value,
b) actuating the switching element (11) between the upper part (4) and the lower part (5) of the battery (1), so that the upper part (4) and the lower part (5) are electrically disconnected,
c) actuating the device (10) for conditioning the temperature by means of the battery management control unit (21) in such a way that energy is alternately transported from the primary side (12) to the secondary side (13) and vice versa until a threshold value for the battery temperature is exceeded, and
d) actuating the switching temperature (11) between the upper part (4) and the lower part (5), so that the upper and lower parts (4, 5) are electrically connected again.

8. Method according to Claim 7, **characterized in that** before the method step c) or during the method step c) a liquid cooling system (18) of the transformer is connected into the cooling circuit (20) of the battery (1).

9. Method according to Claim 7 or 8, **characterized in that** before the method step c) or during the method step c) other elements are disconnected from the cooling circuit (20) of the battery (1).

## Revendications

1. Dispositif (10) de conditionnement thermique d'une batterie (1), le dispositif (10) possédant un élément de commutation (11) qui est disposé entre une partie supérieure (4) et une partie inférieure (5) de la batterie (1), le dispositif (10) possédant un convertisseur CC/CC isolé galvaniquement, le convertisseur CC/CC possédant un côté primaire (12) et un côté secondaire (13), le côté primaire (12) possédant une première borne (A1) pour le pôle positif CC+ de la batterie (1) et une deuxième borne (A2) pour le potentiel bas de la partie supérieure (4) de la batterie (1), le côté secondaire (13) possédant une troisième borne (A3) pour le potentiel haut de la partie inférieure (5) de la batterie (1) et une quatrième borne (A4) pour le pôle négatif CC- de la batterie (1), le côté primaire (12) et le côté secondaire (13) possédant respectivement deux demi-ponts (H1, H2 ; H3, H4) entre lesquels est disposé un transformateur (14), au moins un côté étant interconnecté avec un organe LC en vue de former un convertisseur LLC.

2. Dispositif selon la revendication 1, **caractérisé en ce qu'**au moins le transformateur (14) possède un refroidissement par liquide (18), qui est intégré dans un circuit de refroidissement (20) de la batterie (1) ou qui peut être commuté dans un circuit de refroidissement (20) de la batterie (1).

3. Dispositif selon la revendication 2, **caractérisé en ce qu'**en plus au moins les demi-ponts (H1-H4) possèdent un refroidissement par liquide (17, 19), qui est intégré dans un circuit de refroidissement (20) de la batterie (1) ou qui peut être commuté dans un circuit de refroidissement (20) de la batterie (1).

4. Unité de batterie (30) comprenant plusieurs modules de batterie (3) qui sont interconnectés entre eux, un contrôleur de gestion de batterie (21) et un dispositif (10) de conditionnement thermique ayant les caractéristiques des revendications 1 à 3.

5. Unité de batterie selon la revendication 4, **caractérisée en ce que** le dispositif (10) possède les dimensions géométriques d'un module de batterie (3).

6. Unité de batterie selon la revendication 4 ou 5, **caractérisée en ce que** l'unité de batterie (10) possède un circuit de refroidissement (20), des éléments (21) supplémentaires étant disposés dans le circuit de refroidissement (20), le circuit de refroidissement (20) étant configuré de telle sorte que les éléments (21) supplémentaires peuvent être déconnectés hors du circuit de refroidissement (20) ou connectés dans le circuit de refroidissement (20).

7. Procédé de conditionnement thermique d'une batterie selon la revendication 4, comprenant les étapes suivantes :
a) détection ou détermination d'une température de batterie, un conditionnement thermique étant effectué au-dessous d'une valeur de seuil,
b) commande de l'élément de commutation (11) entre la partie supérieure (4) et la partie inférieure (5) de la batterie (1), de sorte que la partie supérieure (4) et la partie inférieure (5) sont séparées électriquement,
c) commande du dispositif (10) de conditionnement thermique par le contrôleur de gestion de batterie (21) de telle sorte que de l'énergie est transportée en alternance du côté primaire (12) vers le côté secondaire (13) et inversement, jusqu'à ce qu'une valeur de seuil pour la température de batterie soit franchie vers le bas et
d) commande de l'élément de commutation (11) entre la partie supérieure (4) et la partie inférieure (5) de sorte que les parties supérieure et inférieure (4, 5) soient de nouveau reliées électriquement.

8. Procédé selon la revendication 7, **caractérisé en ce qu'**un refroidissement par liquide (18) du transformateur soit commuté dans le circuit de refroidissement (20) de la batterie (1) avant l'étape c) ou pendant l'étape c).

9. Procédé selon la revendication 7 ou 8, **caractérisé en ce que** d'autres éléments sont déconnectés hors du circuit de refroidissement (20) de la batterie (1) avant l'étape c) ou pendant l'étape c).
